# EUROPEAN PATENT APPLICATION

(11) **EP 3 699 838 A1**
(43) Date of publication of application: **26.08.2020**
(21) Application number: 19159054.6
(22) Date of filing: 25.02.2019
(51) Int. Cl.: G06Q 10/06

(54) **METHOD AND SYSTEM FOR PROVIDING ACCESS TO DATA OF ASSETS IN A FACILITY**

(71) Applicant: Siemens Aktiengesellschaft, 80333 München (DE)
(72) Inventor: SELLE, Sven, 90489 Nürnberg (DE); VESPER, Ulf, 91325 Adelsdorf (DE)
(74) Representative: Isarpatent

(57) **Abstract**

The present invention provides a method and system for providing access to data of an asset (108A) in a facility (106). In one embodiment, a method comprises receiving, by a cloud computing system (102), a request to access aggregated data values associated with an asset (108A) located in the facility (106) from a user device (122A). The data values correspond to one or more aspects associated with the asset (108A). The method comprises determining whether a data model for aggregating raw data values corresponding to the aspects exists in a data store (120). Furthermore, the method comprises dynamically generating a new data model (604B) for aggregating the raw data values corresponding to the aspects when the data model does not exist in the data store (120). The method comprises aggregating the raw data values corresponding to the aspects based on the new data model (604B). Moreover, the method comprises providing the aggregated data values to the user device (122A).

## Description

The present invention related to a cloud computing system, and more particularly relates to a method and system for providing access to data of assets in a facility (e.g., an industrial plant) .

With advent of cloud computing technology, a large number of devices are connected to a cloud computing system via the Internet. The devices may be located in a remote facility connected to the cloud computing system. For example, the devices can be equipments, sensors, actuators, robots, machinery in an industrial set-up(s). The devices can be medical devices and equipments in a healthcare unit. The devices can be home appliances or office appliances in a residential/commercial establishment.

The cloud computing system may enable remote configuring, monitoring, controlling, and maintaining connected devices (also commonly known as 'assets'). Also, the cloud computing system may facilitate storing large amounts of data periodically gathered from the devices, analyzing the large amounts of data, and providing insights (e.g., Key Performance Indicators, Outliers) and alerts to operators, field engineers or owners of the devices via graphical user interface (e.g., of web applications). The insights and alerts may enable controlling and maintaining the devices, leading to efficient and fail-safe operation of the devices. The cloud computing system may also enable modifying parameters associated with the devices and issues control commands via the graphical user interface based on the insights and alerts.

The cloud computing system may comprise a plurality of servers or processors (also known as 'cloud infrastructure'), which are geographical distributed, connected with each other via a network. A dedicated platform (hereinafter referred to as 'cloud platform') is installed on the servers/processors for providing above functionality as a service (hereinafter referred to as 'cloud service'). The cloud platform may comprise a plurality of software programs executed on one or more servers or processors of the cloud computing system to enable delivery of the requested service to the devices and its users.

One or more application programming interfaces (APIs) are deployed in the cloud computing system to deliver various cloud services to the users. One such cloud service may include providing time series data values associated with assets in the facility to the user. Typically, time series data values are aggregated in one or more data models stored in a data store. The data models may be pre-configured by a system engineer prior to providing access to users based on his limited knowledge. The data model may be associated with an asset and its specific aspects. The data model may aggregate data for those aspects of the assets for specified time period.

For example, when a user requests for aggregated data values of aspects (speed, time) of an asset (motor) for a specific time range (one week), the cloud service generates an API call to retrieve the requested data values from the respective data model in the data store. The cloud service may provide the aggregated data values to the user if the pre-configured data model for aggregating the requested data values exists in the data store. Otherwise, the cloud service may provide an error notification to the user.

Currently, the data models are preconfigured and cannot be altered by user in real-time. In most of the cases, the system engineer may not be fully aware of requirements of user in terms of type of data desired to be accessed for which aspect of which asset in the facility and within what time period. Hence, the cloud service may not be able to provide time series data values to the user if the user requirement does not meet pre-configured data models. The cloud service may return an error to the user. This may cause inconvenience to the user.

In light of the above, there exists a need to provide a system which can provide access to data values of assets irrespective of whether a pre-configured data model exists or not.

Therefore, it is an object of the present invention to provide a system for providing access to data of assets in a facility by dynamically generating a data model for aggregating the requested data values.

The object of the present invention is achieved by a method for providing access to data of assets in a facility (e.g., industrial plant, offices, power plant, hospital, residential apartments, energy grid, etc.). The method comprises receiving, by a cloud computing system, a request to access aggregated data values associated with the asset in the facility from a user device. The data values correspond to one or more aspects associated with the asset. For example, an asset can be a motor. In such a case, the aspects associated with the motor includes speed, revolutions per minute, etc. The data values can be time-series data values aggregated from raw data values. The raw data values are collected in an interval and aggregated for a time range to obtain the aggregated data values requested by a user.

The method further comprises determining whether a data model for aggregating raw data values corresponding to the one or more aspects associated with the asset exists in a data store. Furthermore, the method includes dynamically generating a new data model for aggregating the raw data values corresponding to one or more aspects of the asset when the data model for aggregating raw data values does not exist in the data store. The method comprises aggregating the raw data values corresponding to the one or more aspects associated with the asset based on the new data model. Moreover, the method comprises providing the aggregated data values corresponding to the one or more aspects associated with the asset to the user device.

In a preferred embodiment, the method comprises providing aggregated data values corresponding to the one or more aspects associated with the asset to the user device when the data model for aggregating raw data values exist in the data store.

In another preferred embodiment, the method comprises dynamically generating a structural extension for a data model of the asset for aggregating the raw data values corresponding to one or more aspects of the asset.

In further another preferred embodiment, the method comprises computing the aggregated data values corresponding to the one or more aspects associated with the asset for a requested time range, and storing the aggregated data values corresponding to the one or more aspects associated with the asset into the generated structural extension.

In yet another preferred embodiment, the method comprises retrieving the aggregated data values corresponding to the aspects associated with the asset from the generated structural extension using an appropriate application programming interface, and outputting the aggregated data values corresponding to the aspects associated with the asset on the user device.

In still another preferred embodiment, the method comprises analyzing the aggregated data values corresponding to the aspects associated with the asset using one or more data analytics algorithms, and providing visual analytics of the aggregated data values based on analysis of the aggregated data values on a graphical user interface of the user device.

The object of the present invention is also achieved by an apparatus comprising one or more processors, at least one data store, and at least one memory communicatively coupled to the one or more processors, wherein the at least one memory comprises a data access module configured to perform one or more method steps described above.

The object of the present invention is achieved by a system comprising an apparatus described above, and one or more user devices communicatively coupled to the apparatus, wherein the apparatus is configured to perform one or more method steps described above.

The object of the present invention is achieved by a computer program product, having instructions stored therein, that when executed by at least one processor, cause the processor to perform one or more method steps described above.

The above-mentioned and other features of the present invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of a cloud computing environment, according to an embodiment of the present invention;
- FIG 2: is a block diagram of a data access manager such as those shown in FIG 1, according to an embodiment of the present invention;
- FIG 3: is a process flowchart depicting an exemplary method of providing access to data values corresponding to aspects of an asset, according to one embodiment of the present invention;
- FIG 4: is a screenshot view of an interactive graphical user interface enabling selection of input parameters for accessing time-series data of an asset in an industrial plant;
- FIG 5: is a schematic representation of a virtual table which contains the input parameters selected by a user via a graphical user interface;
- FIG 6A-6B: are schematic representations of components of a cloud computing system configured to provide the time-series data of the asset, according to an embodiment of present invention;
- FIG 7: is a schematic representation of a graphical user interface displaying the time-series data of the asset which is retrieved from a data store based on the input parameters captured in the virtual table;
- FIG 8: is a screenshot view of a graphical user interface displaying a visualization of the time-series data of the asset; and
- FIG 9: is a schematic representation of the cloud computing system such as those shown in FIG 1, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

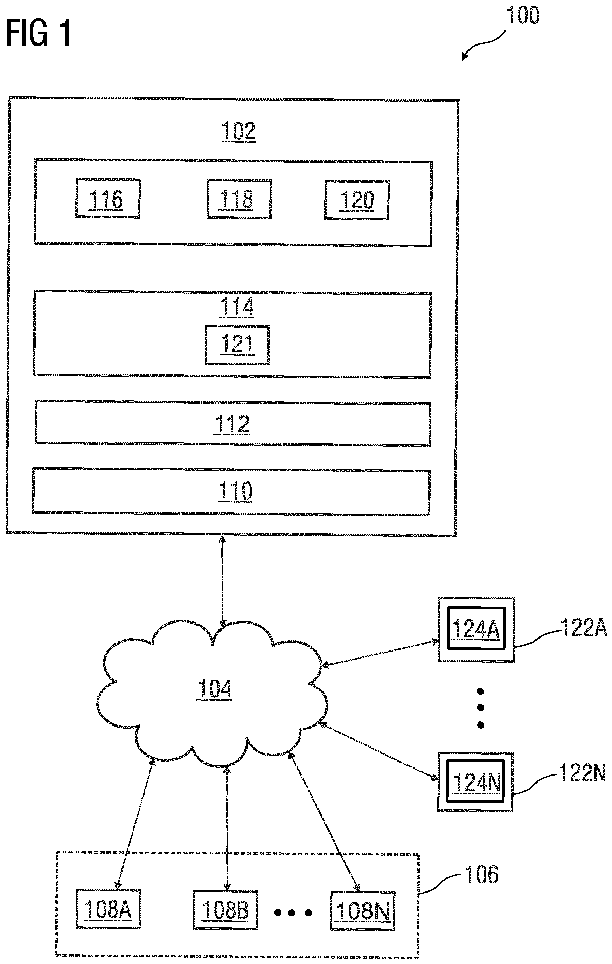

FIG 1 is a schematic representation of a cloud computing environment 100, according to an embodiment of the present invention. Particularly, FIG 1 depicts the cloud computing system 102 capable of providing cloud services for managing an industrial plant 106 comprising assets 108A-N. The cloud computing system 102 is connected to assets 108A-N in the industrial plant 106 via a network 104 (e.g., Internet). The assets 108A-N may include servers, robots, switches, automation devices, motors, valves, pumps, actuators, sensors and other industrial equipment. Although, FIG 1 illustrates the cloud computing system 102 connected to a single industrial plant 106, one skilled in the art can envision that the cloud computing system 102 can be connected to several industrial plants 106 located at different locations via the network 104.

The cloud computing system 102 is also connected to user devices 122A-N via the network 104. The user devices 122A-N can access the cloud computing system 102 for accessing cloud services (e.g., visualization service). The user devices 122A-N can be a laptop computer, desktop computer, tablet computer, smart-phone and the like. The user devices 122A-N can access cloud services (such as providing performance visualization of assets 108A-N) via graphical user interfaces 124A-N.

The cloud computing system 102 may be a public cloud, private cloud or a hybrid cloud configured to provide dedicated cloud services to its users. The cloud computing system 102 comprises a network interface 110, hardware resources and OS 112, and a cloud platform 114. The network interface 110 enables communication between the cloud computing system 102 and the industrial plants 106. Also, the network interface 110 enables communication between the cloud computing system 102 and the user devices 122A-N.

The hardware resources and OS 112 may include one or more servers on which an operating system (OS) is installed. The servers may comprise one or more processing units, one or more storage devices (e.g., memory units) for storing data (e.g., data store 120) with time-series data of assets 108A-N and machine-readable instructions (e.g., applications 116 and application programming interfaces 118), and other peripherals required for providing cloud computing functionality.

The cloud platform 114 is a platform which enables functionalities such as data storage, data analysis, data visualization, data communication, etc. using the hardware resources and OS 112, and delivers the aforementioned cloud services using the application programming interfaces 118 deployed therein. The cloud platform 114 may comprise a combination of dedicated hardware and software built on top of the hardware and OS 112.

According to the present invention, the cloud platform 114 comprises a data access manager 121 which provides easy access to time-series data of the assets 108A-N stored in the data store 120 via the application programming interfaces 118 without a need for skilled personnel. The data access manager 121 is stored in the form of machine-readable instructions stored on the cloud computing system 102, executable by the processing units. The data access manager 121 is explained in greater detail in the description which follows.

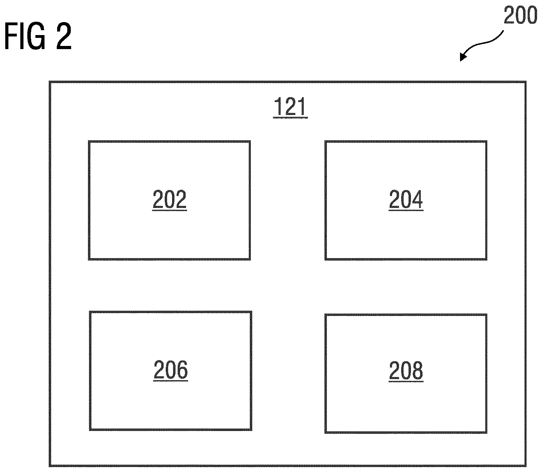

FIG 2 is a block diagram of the data access manager 121 such as those shown in FIG 1, according to an embodiment of the present invention. The data access manager 121 comprises a data model generator 202, an API call generator 204, a data retrieval module 206, and a data rendering module 208.

The data model generator 202 is configured to receive a request to access aggregated data values (e.g., time series data values) associated with the asset 108A in an industrial plant 106 from a user device 122A. The data values correspond to one or more aspects associated with the asset 108A. The data model generator 202 is configured to determine whether a data model for aggregating raw data values corresponding to the one or more aspects associated with the asset exists in a data store 120. The data model generator 202 is configured to dynamically generate a new data model for aggregating the data values corresponding to one or more aspects of the asset 108A when the data model for aggregating raw data values does not exist in the data store 120. The data model generator 202 aggregates the raw data values corresponding to the one or more aspects associated with the asset 108A using the new data model.

The API call generator 204 is configured to generate an Application Programming Interface (API) request (also referred as 'API Call') to retrieve the aggregated raw data values from the new data model. The data retrieval module 206 is configured to retrieve the aggregated data values from the data store 120 by executing an API deployed on the cloud computing system 102 based on the API request. For example, the API comprises a function which is executed based on the API request. Execution of the function results in retrieval of the desired aggregated data values corresponding to one or more aspects of the asset 108A from the data store 120.

The data rendering module 208 is configured to provide the retrieved data values corresponding to the aspects associated with the asset to the requesting user device 122A. In an exemplary implementation, the data rendering module 208 is configured to transform the retrieved data values of the asset in a desired output format (table, graphs, etc.) and render the transformed data values of the asset in the desired output format on the user device 122A. In this manner, the aggregated data values corresponding to the aspects associated with the asset 108A is provided to the user device 122A by dynamically creating a new data model on-the-fly for aggregating requested data values already exists in the data store 120.

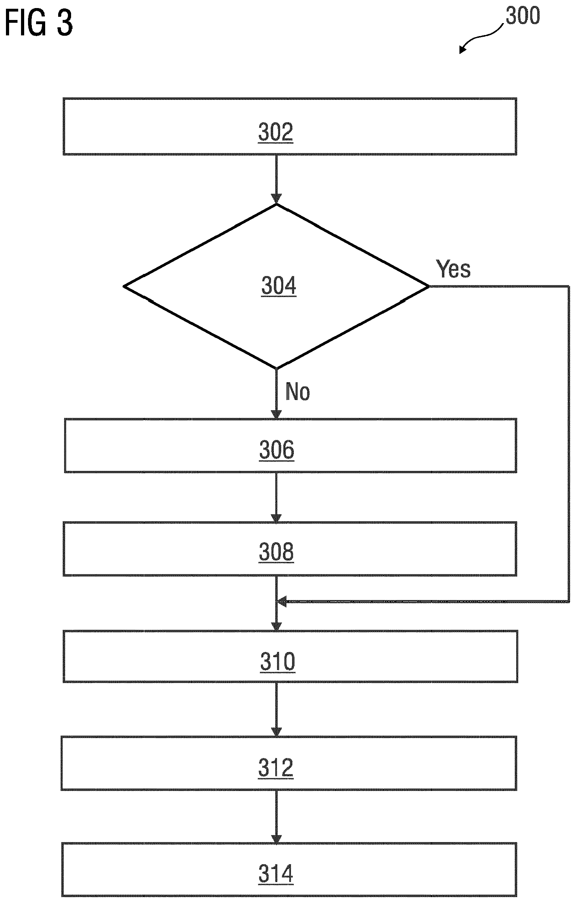

FIG 3 is a process flowchart 300 depicting an exemplary method of providing access to data values corresponding to aspects of an asset, according to one embodiment of the present invention. At step 302, a request to access aggregated data values (e.g., time series data) corresponding to one or more aspects associated with an asset 108A in an industrial plant 106. Consider that, an asset 108A is a motor. The aspects associated with the motor includes revolutions per minute, winding temperature, vibration, etc. At step 304, it is determined whether a data model for aggregating raw data values corresponding to the aspects of the asset 108A exists in the data store 120. If the data model for aggregating raw data values exist in the data store 120, then at step 312 is performed.

If the data model for aggregating raw data values does not exist in the data store 120, then at step 306, a new data model is dynamically generated on-the-fly in the data store 120. In an embodiment, a structural extension for a data model of the asset is dynamically generated for aggregating the raw data values corresponding to the aspects of the asset 108A. At step 308, the raw data values corresponding to the aspects of the asset 108A are aggregated using the new data model. In an embodiment, the aggregated data values corresponding to the aspects of the asset 108A is computed for a requested time range. In another embodiment, the aggregated data values corresponding to the aspects of the asset 108A is stored in the generated structural extension.

At step 310, the aggregated data values corresponding to the aspects of the asset 108A is retrieved from the generated structural extension using an appropriate API 118. At step 312, the aggregated data values corresponding to the aspects of the asset 108A using one or more known data analytics algorithm. At step 314, visual analytics of the aggregated data values are provided based on the analysis of the aggregated data values on a graphical user interface 124A of the user device 122A.

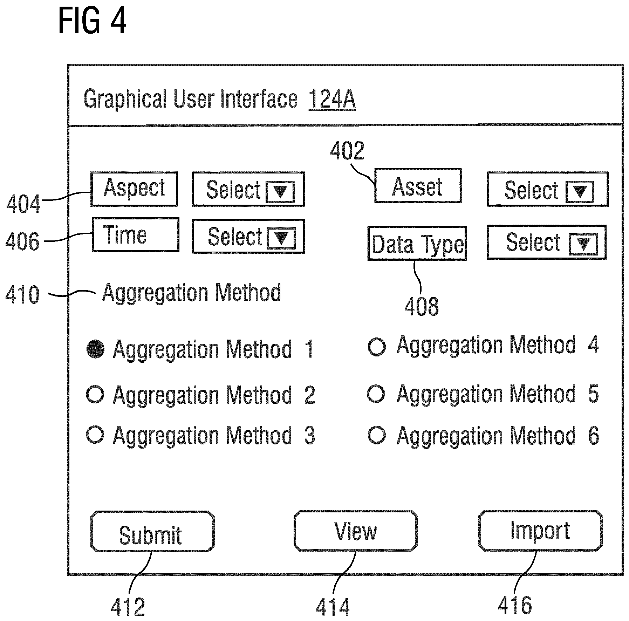

FIG 4 is a screenshot view 400 of an interactive graphical user interface 124A enabling selection of input parameters for accessing time-series data of the assets 108A-N in the industrial plant 106. The graphical user interface 124A displays an asset field 402, an aspect field 404, a time field 406, a data type field 408, an aggregation method field 410, a submit button 412, a view button 414, and an import button 416.

The asset field 402 enables a user to select an asset from a list of assets 108A-N displayed via a drop down menu. The user can select an asset whose time-series data is desired to be accessed from the data store 120 using APIs 118. For example, the asset may be a honing device, a motor, a pump, a furnace, a turbine, a sensor, an actuator, a controller, a robot, a windmill, a computer-tomography machine, a CNC machine, and so on.

The aspect field 404 enables the user to select one or more aspects associated with the selected asset. For example, if the user has selected 'motor' in the asset field 402, then the aspect field 404 enables the user to select aspects such as speed, revolutions per minute, and so on.

The time field 406 enables the user to select a time period associated with the time-series data of the asset to be retrieved. The user can select time period in the time field 406 via a drop down menu or a calendar widget. The time period may be in hours, days, weeks, months or years.

The data type field 408 enables the user to select data type associated with the time-series data to be retrieved. The data type field 408 displays a drop down menu with options such as 'raw data values' or 'aggregated data values'.

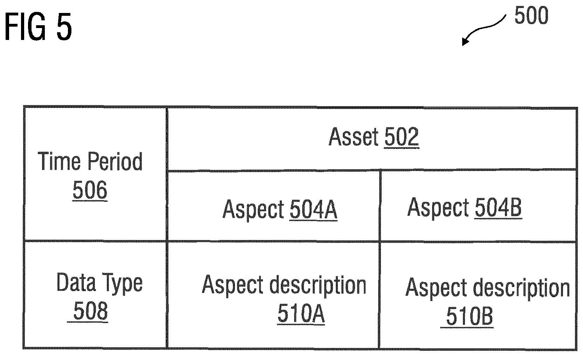

The aggregation method field 410 enables the user to select one or more aggregation methods associated with the time-series data to be retrieved via radio buttons. The user selects the aggregation methods if the user has selected the data type as 'aggregated data values' in the data type field 408. In the FIG 5, the user has selected the aggregation method 1.

The submit button 412 enables the user to submit a request to retrieve the time-series data of the asset from the data store 120 when the user has selected the input parameters in the fields 402 to 410. The view button 414 enables the user to view the selected input parameters in the graphical user interface 124A. The import button 416 enables the user to import the selected input parameters in a specific file format (e.g., portable document format) or another location.

FIG 5 is a schematic representation of a virtual table 500 which contains a set of input parameters selected by a user via a graphical user interface. The virtual table 500 comprises an asset block 502, aspect blocks 504A and 504B, time period block 506, data type block 508, and aspect description blocks 510A and 510B.

The asset block 502 indicates an unique identifier of an asset selected by the user in the asset field 402 of FIG 4. The aspect blocks 504A and 504B indicates aspects selected by the user in the aspect field 404 of FIG 4. The time period block 506 indicates time period selected by the user in the time field 406 of FIG 4.

The data type block 608 indicates data type selected by the user in the data type field 508 of FIG 5. Also, the data type block 608 may include information on any aggregation methods if the data type is selected as 'aggregated data values'.

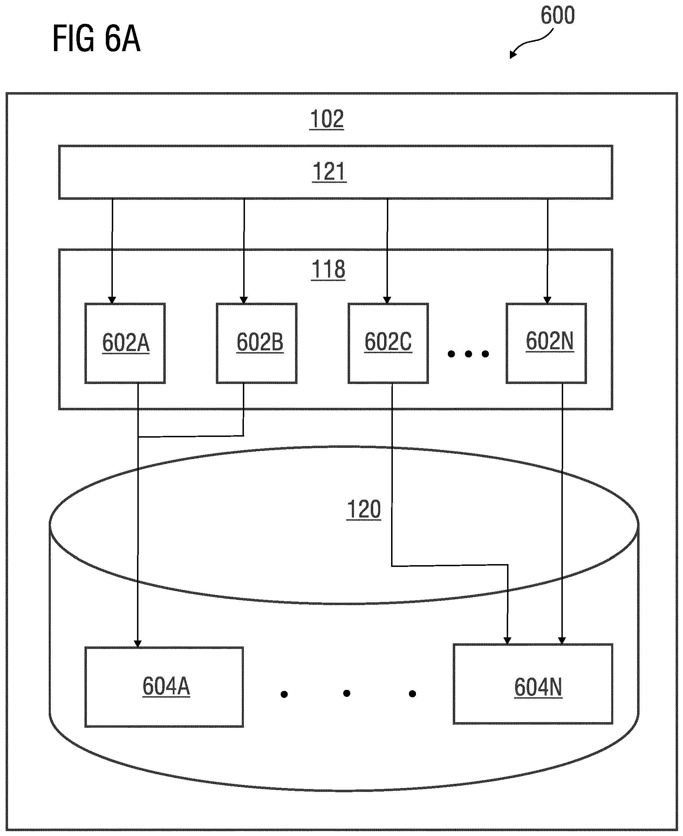

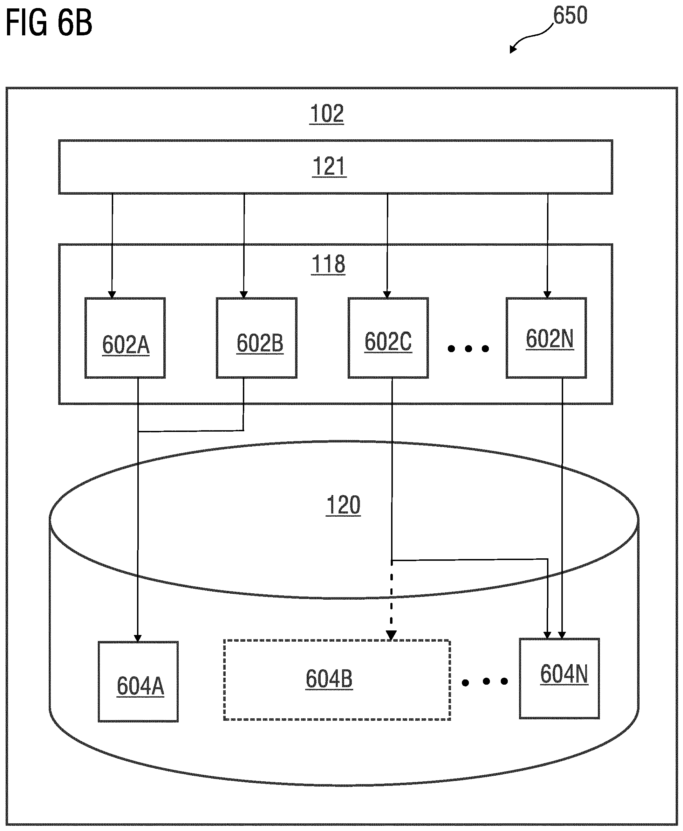

FIG 6A and FIG 6B are schematic representations 600 and 650 of components of the cloud computing system 102 configured to provide time-series data of assets 108A-N, according to an embodiment of present invention. The cloud computing system 102 enables users to monitor performance/condition of assets 108A-N. The cloud computing system 102 employs the data access manager 121, the APIs 118, and the data store 120. The API 118 employs functions 602A-N which enables the data access manager 121 to access time-series data of the assets 108A-N from the data store 120. The data store 120 comprises data models 604A-N which stores raw and/or aggregated data of the assets 108A-N. It can be noted that each of the data models 604A-N stores time-series data of particular asset or industrial plant. Also, each of the functions 602A-N is configured to access one or more data models 604A-N in the data store 120.

The data access manager 121 enables users to select a set of input parameters (e.g., asset, aspects, time period, data type, etc.) via an interactive graphical user interface (e.g., the graphical user interface 124A) displayed on a user device (e.g., the user device 122A) to access aggregated data values corresponding to one or more aspects of an asset 108A. The data access manager 121 automatically captures the selected input parameters in a virtual table 500. The data access manager 121 determines whether a data model comprising requested aggregated data values exists in the data store 120 by searching the data store 120 using a data model identifier, an asset identifier, and/or an aspect identifier. If the data model comprising the aggregated data values exists in the data store 120, then the data access manager 121 transforms the input parameters in the virtual table 500 into an API call. The data access manager 121 forwards the API call to the appropriate API 118 responsible for retrieving aggregated time-series data from the data store 120. The API 118 invokes one of the functions 602A-N to retrieve the aggregated time-series data of the asset 108A based on the received API call. For example, the API 118 determines an asset identifier associated with the asset 108A whose time-series data is requested from the API call. Then, the API 118 determines a data model which stores the requested time-series data of the asset 108A from the plurality of data models 604A-N stored in the data store 120. Finally, the API 118 determines one of the functions 602A-N which is configured to access the determined data model. For the purpose of illustration, consider that the data model 604A stores the requested time-series data of the asset 108A. It can be seen from FIG 6 that the function 602A and the function 602B can access the data model 604A. In such situations, the API 118 may invoke any of the available functions 602A and 602B.

Let us consider that, the API 118 invokes the function 602A to access the data model 604A. Accordingly, the function 602A is executed based on the API call. As a result, the function 602A accesses the data model 604A and retrieves the requested time-series data of the asset 108A. The retrieved time-series data may be of particular data type and for time period specified in the API call. The API 118 returns the retrieved time-series data of the asset 108A to the data access manager 121. The data access manager 121 provides the requested time-series data of the asset 108A in a desired output format to the user device 122A, which is then displayed on the graphical user interface 124A. Alternatively, the data access manager 121 may provide the requested time-series data of the asset 108A to a visualization application deployed on the cloud computing system 102. The visualization application may process the time-series data of the asset 108A and renders a visualization of the time-series data on the user device 122A in a preferred output format. The visualization of the time-series data in the specific output format provides deeper insights into performance/condition of the asset 108A. The deeper insights into performance/condition of the asset 108A may enable operator or field engineer to take further actions for efficient operation of the asset 108A and the industrial plant 106.

If the data access manager 121 determines that a data model comprising aggregated time series data does not exist in the data store 120, then the data access manager 121 generates a new data model (e.g., a data model 604B of FIG 6B) in the data store 120, as shown in FIG 6B. The data access manager 121 aggregates the requested time series data for a specified time period in the new data model 604B based on the virtual table 500. The data access manager 121 transforms the input parameters in the virtual table 500 into an API call. The data access manager 121 forwards the API call to the appropriate API 118 responsible for retrieving aggregated time-series data from the data store 120. The API 118 invokes one of the functions 602A-N (e.g., function 602C) to retrieve the aggregated time-series data of the asset 108A from the new data model 604B based on the received API call.

Accordingly, the function 602C accesses the data model 604B and retrieves the requested time-series data of the asset 108A. The retrieved time-series data may be of particular data type and for time period specified in the API call. The API 118 returns the retrieved time-series data of the asset 108A to the data access manager 121. The data access manager 121 provides the requested time-series data of the asset 108A in a desired output format to the user device 122A, which is then displayed on the graphical user interface 124A. Alternatively, the data access manager 121 may provide the requested time-series data of the asset 108A to a visualization application deployed on the cloud computing system 102. The visualization application may process the time-series data of the asset 108A and renders a visualization of the time-series data on the user device 122A in a preferred output format.

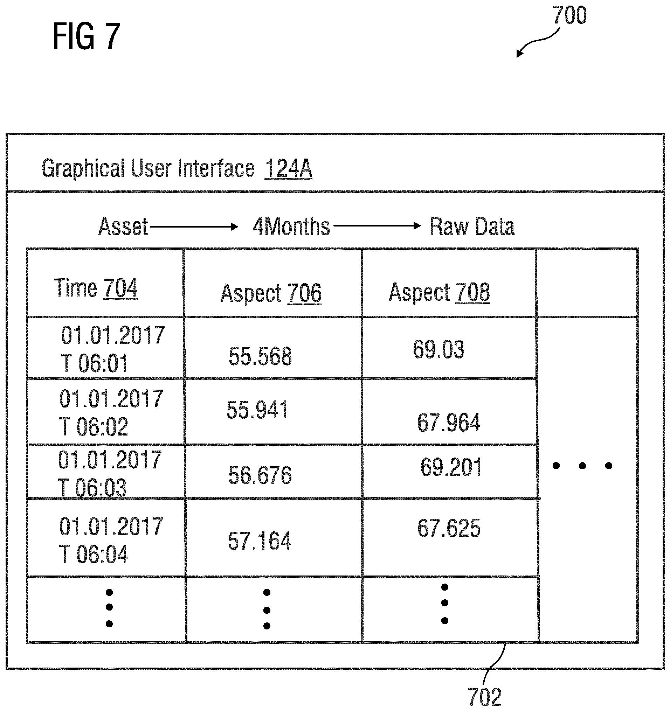

FIG 7 is a schematic representation 700 of a graphical user interface 124A displaying time-series data of the asset 108A which is retrieved from the data store 120 based on the input parameters captured in the virtual table 500. The graphical user interface 124 displays the aggregated time-series data of the asset selected in the asset field 402 of FIG 4 for four months in a tabular format 702. The tabular format 702 comprises a time field 704, an 'aspect 1' field 706, and an 'aspect 2' field 708. The time field 704 indicates time stamp corresponding to the time-series data displayed in the 'aspect 1' field 706 and the 'aspect 2' field 708. The 'aspect 1' field 706 and the 'aspect 2' field 708 displays time-series data values corresponding to the time stamps in the time field 704.

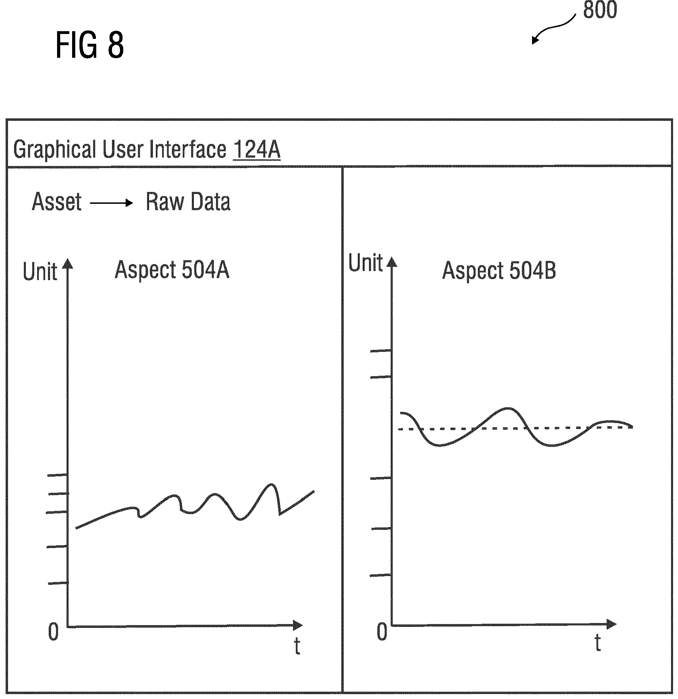

FIG 8 is a screenshot view 800 of a graphical user interface 124A displaying a visualization of time-series data of an asset selected in the asset field 402 in FIG 4. The graphical user interface view 124A displays graphical visualizations of the time-series data for the aspect 1 and the aspect 2 associated with the asset 108A. The graphical visualization facilitates the user to monitor performance of the asset 108A and take necessary actions for efficient and fail-safe operation of the industrial plant 106.

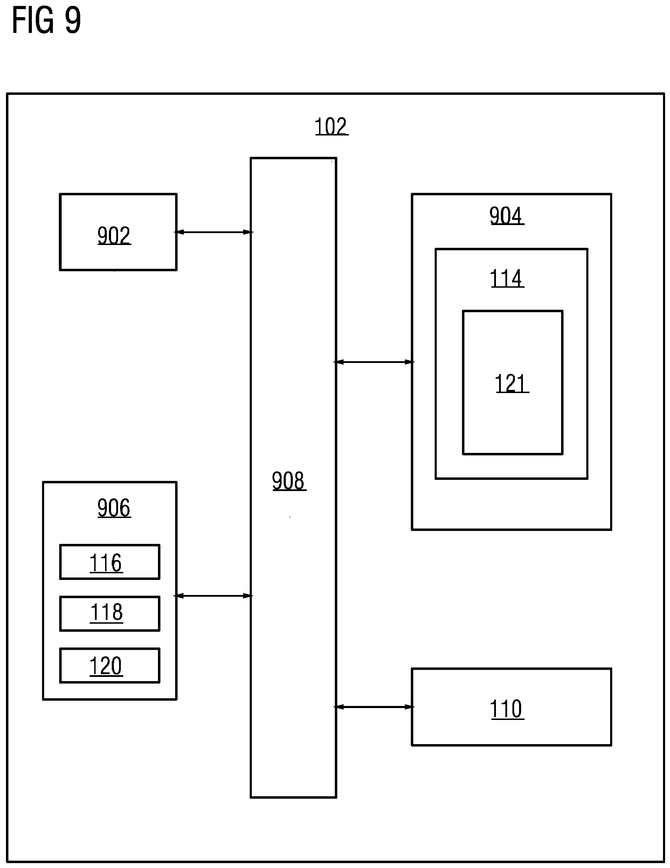

FIG 9 is a schematic representation of the cloud computing system 102 such as those shown in FIG 1, according to an embodiment of the present invention. The cloud computing system 102 comprises processing units 902, a memory unit 904, a storage unit 906, a communication interface 908, and the network interface 110.

The processing units 902 may be one or more processor (e.g., servers). The processing units 902 are capable of executing machine-readable instructions stored on a computer-readable storage medium such as the memory unit 904 for performing one or more functionalities described in the foregoing description including but not limited to providing access to time series data of assets 108A-N. The memory unit 904 comprises the cloud computing platform 114 stored in the form of machine-readable instructions and executable by the processing units 902. Alternatively, the cloud computing platform 114 may take a form of hardware such as a processor with embedded software. The cloud computing platform 114 comprises the data access manager 121 stored in the form of machine-readable instructions executable by the processing units 902. When executed by the processing units 902, the data access manager 121 creates a new data model 604B for aggregating time series data of the asset 108A and aggregates time series data of the asset using the data model 604B. The data access manager 121 retrieves the time series data of the asset 108A using the application programming interfaces 118, and provides the retrieved time series data to the user device 122A. In some embodiments, the data access manager 121 analyzes the time series data of the asset 108A and provides visual analytics of the analyzed time series data of the asset 108A to the user device 122A.

The storage unit 906 can be volatile or non-volatile storage. In the preferred embodiment, the storage unit 906 comprises the data store 120 storing data models 604A-N comprising raw and aggregated time series data of the assets 108A-N. The storage unit 906 comprises applications 116 and application programming interfaces 118 for accessing time series data stored in the data models 604A-N. The communication interface 908 acts as interconnect means between different components of the cloud computing system 102. The communication interface 908 may enable communication between the processing units 902, the memory unit 904, the storage unit 906, and the network interface 110. The processing units 902, the memory unit 904, and the storage unit 906 may be located in same location or at different locations remote from the industrial plant 106.

The network interface 110 is configured to establish and maintain communication links with the industrial plant 106. Also, the network interface 110 is configured to maintain a communication channel between the cloud computing system 102 and the user devices 122A-N.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of reference numerals

100 - Cloud computing environment
102 - Cloud computing system
104 - Network
106 - Industrial plant
108A-N - Assets
110 - Network Interface
112 - Hardware resources and OS
114 - Cloud platform
116 - Applications
118 - APIs
120 - Data Store
121 - Data access manager
122A-N - User devices
124A-N - Graphical user interface
202 - Data model generator
204 - API call generator
206 - Data retrieval module
208 - Data rendering module
402A-N - Functions
404A-N - Data Models

## Claims

1. A method of providing access to data associated with at least one asset (108A) in a facility (106), comprising:
receiving, by a cloud computing system (102), a request to access aggregated data values associated with the asset in the facility (106) from a user device (122A), wherein the data values correspond to one or more aspects associated with the asset (108A);
determining whether a data model for aggregating raw data values corresponding to the one or more aspects associated with the asset (108A) exists in a data store (120);
dynamically generating a new data model (604B) for aggregating the raw data values corresponding to one or more aspects of the asset (108A) when the data model for aggregating raw data values does not exist in the data store (120);
aggregating the raw data values corresponding to the one or more aspects associated with the asset (108A) based on the new data model (604B); and
providing the aggregated data values corresponding to the one or more aspects associated with the asset (108A) to the user device (122A).

2. The method according to claim 1, wherein determining whether the data model for aggregating raw data values exists in the data store (120) comprises:
providing aggregated data values corresponding to the one or more aspects associated with the asset (108A) to the user device (122A) when the data model (604A) for aggregating raw data values exist in the data store (120).

3. The method according to claim 1, wherein dynamically generating the new data model (604B) for aggregating the raw data values corresponding to one or more aspects of the asset (108A) comprises:
dynamically generating a structural extension for a data model of the asset (108A) for aggregating the raw data values corresponding to one or more aspects of the asset (108A).

4. The method according to claim 1, wherein aggregating the raw data values corresponding to the one or more aspects associated with the asset (108A) based on the new data model (604B) comprises:
computing the aggregated data values corresponding to the one or more aspects associated with the asset (108A) for a requested time range; and
storing the aggregated data values corresponding to the one or more aspects associated with the asset (108A) into the generated structural extension.

5. The method according to claim 4, wherein providing the aggregated data values corresponding to the one or more aspects associated with the asset (108A) to the user device (122A) comprises:
retrieving the aggregated data values corresponding to the aspects associated with the asset (108A) from the generated structural extension using an appropriate application programming interface (118); and
outputting the aggregated data values corresponding to the aspects associated with the asset (108A) on the user device (122A) .

6. The method according to claim 1 or 5, wherein outputting the aggregated data values corresponding to the aspects associated with the asset (108A) on the user device (122A) comprises:
analyzing the aggregated data values corresponding to the aspects associated with the asset (108A) using one or more data analytics algorithms; and
providing visual analytics of the aggregated data values based on analysis of the aggregated data values on a graphical user interface (124A) of the user device (122A).

7. The method according to any of the claims 1 to 6, wherein the aggregated data values are time-series data values.

8. An apparatus (102) comprising:
one or more processors (902);
at least one data store (120); and
at least one memory (904) communicatively coupled to the one or more processors (902), wherein the at least one memory (904) comprises a data access manager (121) configured to perform a method according to any of the claims 1 to 7.

9. A system (100) comprising:
an apparatus (102) according to claim 8; and
one or more user devices (122A-N) communicatively coupled to the apparatus (102) via a network (104), wherein the apparatus (102) is configured to perform a method according to any of the claims 1 to 7.

10. A computer program product, having instructions stored therein, that when executed by at least one processor (902), cause the processor (902) to perform a method according to any of the claims 1 to 7.
